# FASCICULE DE BREVET EUROPEEN

(11) **EP 3 839 617 B1**
(45) Date de publication et mention de la délivrance du brevet: **26.06.2024**
(21) Numéro de dépôt: 19217221.1
(22) Date de dépôt: 17.12.2019
(51) Int. Cl.: G02F 1/1333, G02F 1/1343, G04B 19/26, G04C 17/00

(54) **DISPOSITIF D AFFICHAGE À CRISTAUX LIQUIDES**
FLÜSSIGKRISTALL-ANZEIGEVORRICHTUNG
LIQUID CRYSTAL DISPLAY DEVICE

(43) Date de publication de la demande: 23.06.2021
(73) Titulaire: The Swatch Group Research and Development Ltd, 2074 Marin (CH)
(72) Inventeur: SAGARDOYBURU, Michel, 2000 Neuchâtel (CH); CURCHOD, Loïc, 1004 Lausanne (CH)
(74) Mandataire: ICB SA

(56) Documents cités:
- EP-A2- 0 939 331
- JP-A- 2008 083 607
- US-A- 5 245 590
- US-A- 5 740 130
- US-A- 6 147 934
- US-A1- 2002 071 069
- US-A1- 2004 257 496
- US-A1- 2008 123 473
- US-A1- 2014 098 332
- US-A1- 2018 267 345

## Description

### Domaine Technique

L'invention concerne un dispositif d'affichage à cristaux liquides, un ensemble de cadran pour pièce d'horlogerie comprenant un cadran et un tel dispositif d'affichage. L'invention concerne également une pièce d'horlogerie et/ou de bijouterie comprenant un tel dispositif d'affichage ainsi qu'un procédé de fabrication d'un tel dispositif d'affichage à cristaux liquides.

### Arrière-plan technologique

Les dispositifs d'affichage à cristaux liquides sont bien connus dans le domaine horloger depuis les années soixante-dix. À l'époque, les dispositifs d'affichage à cristaux liquides étaient utilisés pour afficher ou cacher différents segments qui formaient, ensemble, des chiffres pour p. ex. indiquer l'heure.

Actuellement, les possibilités offertes par les affichages à cristaux liquides se sont bien développées. Par exemple, un décor imprimé sur un film plastique peut être placé entre les polariseurs de l'affichage. L'affichage peut laisser apparaitre sélectivement différentes parties du décor imprimé. Le film en plastique transparent peut recevoir un décor imprimé digitalement par jet d'encre. Les encres de l'image peuvent être opaques ou semi-transparentes pour réaliser des filtres de couleur. Le film et son impression sont laminés au moyen d'un film adhésif optiquement transparent sur la face arrière de la cellule à cristaux liquides. Il est aussi possible de laminer le film et son impression sur la face avant de la cellule à cristaux liquides. Le film adhésif a typiquement une hauteur comprise entre 15 µm et 100 µm.

Une autre possibilité est de décorer la face avant du polariseur supérieur par une impression d'encre, le plus souvent par sérigraphie. Évidemment, il est possible de décorer la face arrière du polariseur arrière par une impression d'encre, aussi le plus souvent par sérigraphie.

D'autre part, il existe des affichages à cristaux liquides matriciels couleurs. Ces derniers utilisent des filtres de couleur (rouge, vert, bleu et noir) pour filtrer la couleur des pixels de la matrice (rouge, vert ou bleu) ou masquer les zones entre les pixels (avec du noir). Ces filtres de couleurs sont généralement placés sur la face intérieure du substrat avant de la cellule à cristaux liquides, sous l'électrode transparente. Ces filtres sont réalisés par impression digitale ou par application de résines photostructurables qui sont structurées en bain chimique par procédé de photolithographie. Introduire les filtres dans la cellule sous l'électrode ajoute une complication technologique au procédé dans le sens, qu'après avoir réalisé ces multiples filtres de couleur, il est nécessaire d'ajouter une couche de planarisation sur laquelle est déposée l'électrode transparente. Les documents suivants sont utiles à la compréhension de l'invention: US 2002/071069 A1, JP 2008 083607 A, US 2004/257496 A1 et US 2008/123473 A1.

### Description générale de l'invention

Un premier aspect de l'invention concerne un dispositif d'affichage à cristaux liquides (LCD), le dispositif d'affichage étant suivant la revendication 1 et comprenant entre autres: deux substrats transparents en regard désignés respectivement substrat avant et substrat arrière, le substrat avant étant celui disposé côté observateur, les substrats avant et arrière étant pourvus sur leurs faces internes d'électrodes structurées transparentes dont la superposition définit un pixel de forme commutable entre deux états optiques, les électrodes étant reliées à une source de tension par l'intermédiaire d'un circuit de commande, formant une cellule fermée par un cadre de scellement pour recevoir dans l'espace délimité par les substrats et le cadre de scellement une composition de cristaux liquides. Le dispositif comprend en plus un motif décoratif en contact direct avec le substrat avant et/ou le substrat arrière

Il sera apprécié que le fait d'avoir un contact direct entre le motif décoratif et un des substrats permet plusieurs avantages : A) L'alignement du motif décoratif par rapport au pixel de forme commutable de l'affichage à cristaux liquides est meilleur car le décor et le pixel de forme sont plus proches. D'une part, l'alignement peut être réalisé plus facilement (p. ex. optiquement) par rapport aux pistes conductrices pendant le procédé de fabrication de la montre, avant que différents films optiques n'empêchent de visualiser précisément les pistes conductrices. B) D'autre part, la parallaxe est réduite à la seule épaisseur du substrat (p. ex. lorsque des substrats minces, de 50 à 300 µm d'épaisseur, sont utilisés, la parallaxe est très faible et les défauts optiques résultants ne sont pas perceptibles à l'oeil nu). C) Parallaxe réduite et alignement précis permettent la réalisation d'une image fine et à haut degré de détails qui s'harmonise bien avec le pixel de forme du LCD. Il n'y a ainsi pas de crosstalk et le pixel de forme peut couvrir exactement la zone souhaitée du décor, quel que soit l'angle d'observation, résultant en une image animée de haute qualité. D) Parce que la couche décorative est en contact direct avec le substrat du LCD et sans film de support, elle est au plus près du réflecteur, ce qui permet à une image de haute résolution ayant de très petites ouvertures de réfléchir plus de lumière. La réflectivité de l'image est ainsi améliorée, car les rayons lumineux réfléchis avec un angle d'incidence important sont moins susceptibles d'être absorbés.

Les électrodes structurées transparentes peuvent être en oxyde d'indium-étain (ITO), ou en oxyde d'indium-zinc (IZO) ou tout autre électrode transparente couramment utilisée dans la fabrication d'affichages électroniques.

Selon un mode de réalisation, la cellule à cristaux liquides peut comprendre une ou plusieurs couches d'alignement de cristaux liquides arrangées sur les électrodes. Préférablement, les une ou plusieurs couches d'alignement de cristaux liquides imposent un mode de cristaux liquides nématiques disposé en hélice (« twisted nematic » en anglais) ou un mode de cristaux liquides nématiques en super hélice (« super-twisted nematic » en anglais) aux cristaux liquides dans la cellule à cristaux liquides. D'autres modes peuvent être considérées, telles que le mode VA (pour « vertical alignement ») ou le mode ECB (pour « electrically controlled biréfringence » ou d'autres variations dérivants de la combinaison des modes précités).

Le motif décoratif peut être disposé sur une surface externe des substrats avant ou arrière. Préférablement, le motif décoratif est disposé sur la surface externe du substrat arrière.

Selon l'invention telle que revendiquée, le motif décoratif est aligné avec les électrodes structurées.

Le motif décoratif peut être, non selon l'invention telle que revendiquée, une image complémentaire aux pixels de forme définis par les électrodes.

Le motif décoratif est, selon l'invention telle que revendiquée, un motif décoratif imprimé digitalement, éventuellement par jet d'encre, ou comprendre une couche d'encre structurée. L'impression digitale fait référence à un procédé pour imprimer une image numérique sur un substrat. Les méthodes d'impression digitale selon l'invention telle que revendiquée sont l'impression à jet d'encre et l'impression laser. Dans les procédés d'impression à jet d'encre, l'image est formée par la projection de gouttelettes d'encre sur le substrat. L'encre peut comprendre des pigments et/ou des teintures en tant que colorants. L'encre peut être photosensible ou non. Le motif décoratif est préférablement imprimé digitalement par jet d'encre.

Alternativement ou additionnellement, le motif décoratif peut comprendre une ou plusieurs couches de résines photosensibles structurées et/ou une ou plusieurs couches minces décoratives structurées (métalliques, diélectrique absorbante (p. ex : TiAION, WO, TiN...) ou miroir diélectrique).

L'ensemble des couches formant le motif décoratif est porté directement par le substrat avant ou le substrat arrière.

Le substrat avant et/ou substrat arrière peut avoir une épaisseur comprise dans l'intervalle allant de 50 µm à 1 mm, préférablement dans l'intervalle allant de 80 µm à 0.5 mm.

Selon un mode de réalisation, le substrat avant est associé à un polariseur avant absorbant et transmissif. De plus, le substrat arrière est associé à un polariseur arrière réflectif et absorbant. Le motif décoratif est disposé entre le substrat arrière et le polariseur arrière.

Selon un mode de réalisation, le substrat avant est associé à un polariseur avant absorbant et transmissif. De plus, le substrat arrière est associé à un polariseur arrière réflectif et absorbant. Le motif décoratif est disposé entre le substrat avant et le polariseur avant.

Selon un mode de réalisation, le substrat avant est associé à un polariseur avant absorbant et transmissif. De plus, le substrat arrière est associé à un réflecteur. Le motif décoratif est disposé entre le substrat avant et le polariseur avant.

La composition de cristaux liquides peut comprendre un colorant dichroïque. Le substrat arrière est alors associé à un réflecteur. Le motif décoratif peut être disposé soit sur la surface externe du substrat avant soit entre le substrat arrière et le réflecteur.

Selon un mode de réalisation, la composition de cristaux liquides comprend un colorant dichroïque. Le substrat avant est associé à un polariseur absorbant transmissif. Le substrat arrière est associé à un réflecteur. Le motif décoratif peut être disposé soit entre le polariseur avant et le substrat avant, soit entre le substrat arrière et le réflecteur.

Selon un mode de réalisation, la composition de cristaux liquides comprend un colorant dichroïque. Le substrat arrière est associé à un polariseur arrière réflectif absorbant. Le motif décoratif peut être disposé entre le polariseur arrière et le substrat arrière.

L'affichage peut être réflectif, émissif ou transflectif. Par affichage transflectif, on entend un affichage hybride réflectif et transmissif. L'affichage est transmissif dans le sens où un rétro-éclairage est arrangé derrière le substrat arrière. L'affichage est aussi réflectif dans le sens où la lumière ambiante incidente est réfléchie par un réflecteur semi-réflectif et semi-transparent derrière le substrat arrière. Dans le cas d'un affichage transflectif, le réflecteur semi-réflectif et semi-transparent combinera la propriété de réfléchir la lumière ambiante tout en permettant de transmettre la lumière du rétro-éclairage.

Le polariseur arrière peut être remplacé par un polariseur transflectif. Un dispositif de rétroéclairage peut être disposé à l'arrière du polariseur transflectif.

Le polariseur arrière peut être remplacé par un polariseur absorbant transparent. Un dispositif de rétroéclairage peut être disposé à l'arrière du polariseur transflectif.

Selon un mode de réalisation particulier de l'invention le motif décoratif est en contact direct avec le substrat avant et avec le substrat arrière et dans lequel le motif décoratif est réalisé en au moins deux portions de motif complémentaire l'une de l'autre la juxtaposition des deux portions de motif complémentaires formant ledit motif décoratif.

Un second aspect de l'invention concerne une pièce d'horlogerie et/ou de bijouterie (p. ex une montre) et/ou une pièce d'électronique portative (p. ex. sportswear intelligent, instruments de mesure portatifs, etc...) et/ou non-portative (p. ex. domotique) comprenant un dispositif d'affichage à cristaux liquides tel décrit ci-dessus.

Un troisième aspect de l'invention concerne un procédé de fabrication d'un dispositif d'affichage à cristaux liquides. Le procédé comprend :
∘ la mise à disposition d'un substrat avant et d'un substrat arrière, les substrats avant et arrière étant pourvus sur leurs faces internes d'électrodes structurées transparentes dont la superposition définit des pixels de forme commutables entre deux états optiques;
∘ la disposition d'un cadre de scellements sur la face interne d'un des deux substrats ;
∘ le scellement des deux substrats ensembles pour définir un espace délimité par les substrats ;
∘ le remplissage de l'espace délimité par les substrats avec une composition de cristaux liquides; et
∘ l'application d'un motif décoratif en contact direct avec le substrat avant ou le substrat arrière.

L'application du motif décoratif comprend:
∘ soit l'impression digitale du motif décoratif, par impression laser ou par jet d'encre,
∘ soit l'application et la structuration, préférablement par photolithographie, d'une résine photosensible,
∘ soit la déposition physique ou chimique en phase vapeur d'une couche mince métallique et/ou diélectrique (typiquement inférieure à 10 microns et de préférence inférieure à 1 micron) et la structuration de la couche mince déposée, préférablement par photolithographie,
∘ soit une combinaison de ces méthodes d'applications.

La combinaison de ces méthodes d'applications peut permettre l'application de plusieurs couches décoratives afin de réaliser des décors plus complexes avec différents degrés de résolution ou finesse.

Selon encore un autre aspect l'invention concerne un ensemble de cadran pour pièce d'horlogerie comprenant un cadran et un dispositif d'affichage à cristaux liquides, le dispositif d'affichage étant selon la revendication 1 et comprenant entre autres: deux substrats transparents en regard désignés respectivement substrat avant et substrat arrière, le substrat avant étant celui disposé côté observateur, les substrats avant et arrière étant pourvus sur leurs faces internes d'électrodes structurées transparentes dont la superposition définit des pixels de forme commutables entre deux états optiques, les électrodes étant reliées à une source de tension par l'intermédiaire d'un circuit de commande, formant une cellule fermée par un cadre de scellement pour recevoir dans l'espace délimité par les substrats et le cadre de scellement une composition de cristaux liquides; et un motif décoratif en contact direct avec le substrat avant et/ou avec le substrat arrière, ledit cadran portant une image statique complémentaire à celle du motif décoratif du dispositif d'affichage. On pourra ainsi avoir, par exemple, le cadran qui forme le ciel avec étoiles fixes, et le motif décoratif pourra représenter certaines planètes, comètes ou autre objets célestes (satellites naturels ou pas) qui seront représentés par le dispositif d'affichage à cristaux liquides de manière dynamique.

### Brève description des dessins

D'autres particularités et caractéristiques de l'invention ressortiront de la description détaillée de certains modes de réalisation avantageux présentés ci-dessous, à titre d'illustration, avec référence aux dessins annexés qui montrent :
- **Fig. 1:**: une vue en coupe d'un dispositif d'affichage à cristaux liquide d'une montre selon un mode de réalisation de l'invention ;
- **Fig. 2:**: une vue du dessus d'une électrode pour un affichage à cristaux liquide d'une montre selon un mode de réalisation de l'invention ;
- **Fig. 3:**: une vue en coupe d'un dispositif d'affichage à cristaux liquide d'une montre selon un mode de réalisation de l'invention ; et
- **Fig. 4:**: une vue de face d'un ensemble de cadran pour pièce d'horlogerie comprenant un cadran et un dispositif d'affichage à cristaux liquides selon l'invention.

### Description détaillée de plusieurs modes de réalisation de l'invention

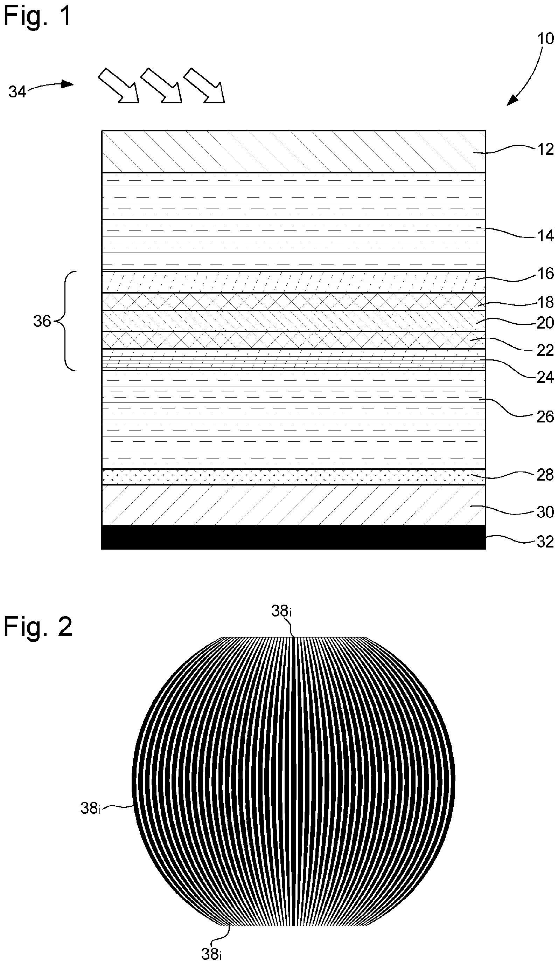

La Fig. 1 illustre un dispositif d'affichage réflectif à cristaux liquides 10 d'une montre selon un mode de réalisation de l'invention. Le dispositif d'affichage 10 comprend un polariseur avant 12 absorbant et transmissif (absorbant pour une polarisation de la lumière et transmissif pour la polarisation orthogonale) , un substrat avant 14 transparent, une électrode avant 16 transparente structurée, une couche d'alignement avant 18, une composition de cristaux liquides 20, une couche d'alignement arrière 22, une électrode arrière 24 transparente structurée, un substrat arrière 26, un motif décoratif 28, un polariseur arrière 30 réflectif et transmissif et un fond noir 32 (ou, selon un autre mode de réalisation, coloré). Alternativement le polariseur arrière 30 peut être un polariseur absorbant et transmissif associé à un réflecteur. Le dispositif d'affichage 10 est réflectif dans le sens ou la lumière environnante incidente 34 est utilisée comme source de lumière pour l'affichage. La lumière environnante incidente 34 traverse les différentes couches du dispositif d'affichage 10 dans l'ordre énuméré ci-dessus, est réfléchie sur le polariseur arrière 30 et retourne vers l'oeil de l'utilisateur. La superposition des électrode 16, 24 structurées définit un ensemble de pixels de forme commutables entre deux états optiques. Les électrodes 16, 24 sont reliées à une source de tension (non représentée) par l'intermédiaire d'un circuit de commande (non représenté). L'application d'une tension (ou l'absence d'application) permet de réaliser une commutation entre les deux états optiques des cristaux liquides 20.

Le substrat avant 14 et le substrat arrière 26 peuvent être en verre ou en plastique. Les substrats 14, 26 sont arrangés de façon opposées afin de créer une cellule à cristaux liquides 36 entre le substrat avant et le substrat arrière. La cellule à cristaux liquides 36 qui comprend l'électrode avant 16, la couche d'alignement avant 18, la composition de cristaux liquides 20, la couche d'alignement arrière 22 et l'électrode arrière 24. Les couches d'alignement 18, 22 forcent les cristaux liquides 20 à adopter une configuration en hélice lorsqu'aucun champ électrique n'est appliqué par les électrodes 16, 24. Les couches d'alignement 18, 22 peuvent être, p. ex., en polyimide. Selon l'orientation des polariseurs 12, 30, le dispositif d'affichage 10 peut fonctionner en mode « normalement blanc » (« normally white » en anglais), c'est-à-dire un mode dans lequel la lumière est réfléchie lorsqu'aucun champ électrique n'est appliqué aux cristaux liquides, ou en mode « normalement noir » (« normally black » en anglais), c'est-à-dire un mode dans lequel la lumière n'est pas réfléchie lorsqu'aucun champ électrique n'est appliqué aux cristaux liquides. L'autre état optique est atteint lorsqu'un champ électrique est appliqué entre les électrodes 16, 24.

Les cristaux liquides 20 du dispositif d'affichage 10 sont arrangés selon plusieurs unités (aussi appelés pixels de forme), définis par les électrodes structurées 16, 24, commutables indépendamment dans le sens où l'état optique d'un premier pixel de forme n'affecte pas l'état optique d'un deuxième pixel de forme directement adjacent au premier pixel de forme. Les différents pixels de forme sont commutés grâce à une tension délivrée par les électrodes 16, 24 structurées. La Fig. 2 illustre une possible structuration des électrodes 16, 24. Des pixels de forme 38ᵢ (en noir sur la Fig. 2) en forme de croissants sont définis afin de pouvoir sélectivement commuter l'état des cristaux liquides situés au niveau des pixels de forme 38ᵢ, entre l'électrode avant 16 et l'électrode arrière 24. Un pixel de forme de commutation 38ᵢ recouvre un ou plusieurs éléments de la couche décorative. Ces éléments peuvent être des parties continues du motif décoratif et/ou des pixels formant ledit motif décoratif dans le cas d'une image de haute résolution. Les pixels de forme peuvent être arrangés de façon régulière (p. ex. pour des affichages matriciels) ou non. La forme des pixels de forme n'est pas limitée. Comme indiqué plus haut, ils peuvent avoir p.ex. une forme de croissant, ou plus simplement une forme rectangulaire ou carrée lorsqu'ils sont observés du dessus de l'affichage.

Le substrat avant 14 et/ou le substrat arrière 26 ont une épaisseur comprise dans l'intervalle allant de 50 µm à 1 mm, préférablement dans l'intervalle allant de 80 µm à 0.5 mm. Selon un premier mode de réalisation, le motif décoratif 28 est imprimé digitalement par jet d'encre directement sur la surface externe du substrat arrière 26. Le motif peut comprendre des zones absorbantes et des zones transparentes permettant à la lumière de (partiellement) passer à travers le motif décoratif pour atteindre le polariseur arrière 30.

Il sera apprécié que le fait d'imprimer directement la couche décorative sur le substrat 26 mitige plusieurs inconvénients des solutions proposées par l'art antérieur. En particulier, l'alignement entre les éléments du motif décoratif et les segments de commutation 38ᵢ est plus précis. L'alignement peut être généralement réalisé avec une précision de 5 µm ou moins, car le motif décoratif 28 est très proche des segments de commutation 38ᵢ définis par les électrodes structurées 16,24 par rapport aux solutions de l'art antérieur. Cela a pour conséquence que les segments de commutation 38ᵢ couvrent exactement les zones souhaitées du motif décoratif, quel que soit l'angle d'observation du dispositif d'affichage. Par « exactement », il est entendu que le décalage est de moins de 5 µm et ne sera donc pas visible à l'oeil nu par l'utilisateur. L'esthétique paraitra sans défaut. D'autre part, l'alignement peut être réalisé optiquement par rapport aux segments de commutation 38ᵢ pendant la fabrication de l'affichage, avant que d'autres couches n'empêchent de visualiser les électrodes, en particulier la structure des électrodes. Il est aussi à noter que la parallaxe est réduite à la seule épaisseur du substrat. L'utilisation de substrats minces (50 à 300 µm) permet de réduire la parallaxe de telle façon que les défauts optiques résultants ne sont pas perceptibles à l'oeil nu. De plus, même si le motif décoratif 28 comprend de très petites ouvertures transparentes, plus de lumière peut être réfléchie car le motif décoratif 28 se situe directement sous le substrat et sans film de support entre la couche décorative et le polariseur arrière 30. Les rayons lumineux réfléchis avec un angle d'incidence important sont alors moins susceptibles d'être absorbés. La réflectivité (et donc la visibilité) du motif décoratif 28 est ainsi améliorée par rapport à l'art antérieur.

Selon un deuxième mode de réalisation de l'invention, le motif décoratif 28 peut être appliqué sur la surface externe du substrat avant 14 au lieu d'être appliqué sur la surface externe du substrat arrière 26 (voir premier mode de réalisation). Il est bien évidement possible de combiner le premier et le deuxième mode de réalisation afin d'obtenir un dispositif d'affichage comprenant deux motifs décoratifs.

Selon un troisième mode de réalisation de l'invention, une ou plusieurs résines photo-structurables peuvent être déposées et structurées par photolithographie sur la surface externe du substrat avant 14 et/ou sur la surface externe du substrat arrière 26. Les résines peuvent être colorées ou noires et être arrangées de façon à former un motif décoratif 28 après déposition.

Selon un quatrième mode de réalisation de l'invention, le motif décoratif 28 peut être une couche mince métallique (p. ex. une couche d'aluminium, une couche d'or, une couche d'argent, une couche de chrome) et/ou diélectrique (p. ex. une couche d'oxy-nitrures colorés) déposée par déposition physique ou chimique en phase vapeur. Le motif décoratif 28 peut être structuré, notamment par photolithographie-gravure. Il est aussi possible de réaliser la déposition et la structuration en une seule étape par déposition au travers d'un masque.

Il est à noter qu'il est possible de combiner les motifs décoratifs 28 décrits ci-dessus afin de réaliser un motif décoratif 28 sur la surface externe du substrat avant et/ou sur la surface externe du substrat arrière comprenant un motif décoratif réalisé tel qu'indiqué ci-dessus.

Selon d'autre modes de réalisation, d'autres arrangements de polariseurs et de motif décoratifs peuvent être contemplés. Par exemple, le substrat avant peut être associé à un polariseur avant absorbant et transmissif et le substrat arrière peut être associé à un réflecteur. Le motif décoratif est disposé entre le substrat avant et le polariseur avant.

La composition de cristaux liquides peut comprendre un colorant dichroïque. Dans ce cas, différents arrangements peuvent aussi être contemplés. Selon un premier exemple, le substrat arrière est associé à un réflecteur. Le motif décoratif peut alors être disposé soit sur la surface externe du substrat avant soit entre le substrat arrière et le réflecteur. Selon un second exemple, le substrat avant est associé à un polariseur absorbant transmissif et le substrat arrière est associé à un réflecteur. Le motif décoratif peut alors être disposé soit entre le polariseur avant et le substrat avant soit entre le substrat arrière et le réflecteur. Selon un troisième exemple, le substrat arrière est associé à un polariseur arrière réflectif absorbant. Le motif décoratif peut alors être disposé entre le polariseur arrière et le substrat arrière.

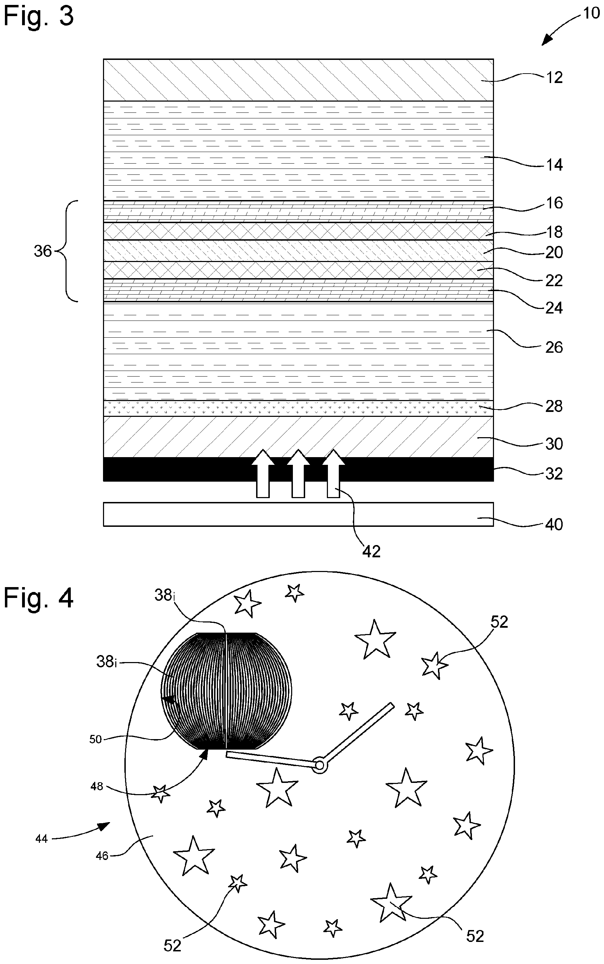

Selon un mode de réalisation de l'invention, le dispositif d'affichage 10 peut être transflectif. Dans ce cas, le dispositif d'affichage 10 comprend un rétroéclairage 40 arrangé à l'arrière d'un fond noir 32 semi-transparent (voir Fig. 3). Dans un autre mode de réalisation, le fond noir 32 semi-transparent pourrait être remplacé par un polarisateur absorbant/transparent. Dans un autre mode de réalisation de dispositif d'affichage transflectif, le polariseur arrière 30 pourrait être remplacé par un polariseur réflectif/transmissif partiellement efficace dans sa fonction réflective, et le fond noir 32 serait remplacé par un polariseur absorbant/transmissif ou un fond semi-absorbant. Dans un autre mode, l'ensemble polariseur arrière 30 et le fond noir 32 serait remplacé par un polariseur transflectif. Le rétroéclairage émet de la lumière 42 et peut comprendre une ou plusieurs diodes électroluminescentes inorganiques et/ou une ou plusieurs diodes électroluminescentes organiques.

Selon un mode de réalisation de l'invention, le dispositif d'affichage 10 peut être transmissif. Dans ce cas, le dispositif d'affichage 10 comprend un rétroéclairage 40 arrangé à l'arrière d'un dispositif d'affichage caractérisé en ce que le polariseur arrière 30 est un polariseur absorbant/transmissif et qu'il n'y a plus de fond noir.

Un exemple d'application d'un tel dispositif d'affichage dans l'horlogerie ou la bijouterie consiste en la réalisation d'une phase de lune par la combinaison d'un motif décoratif de haute résolution de la lune avec une cellule à cristaux liquides dont les segments des électrodes sont arrangés pour former une multitude de croissants (voir Fig. 2) qui, alignés avec le motif décoratif de la lune, permettent d'afficher l'évolution des phases de la lune. Le dispositif d'affichage à cristaux liquides sert à cacher les parties de la lune qui sont actuellement cachées par l'ombre de la Terre. Il est aussi possible que les électrodes comprennent d'autres segments pour afficher des informations supplémentaires telles que l'heure, la date, le jour, des informations météorologiques, barométrique, altimétriques ou pour animer des éléments décoratifs ou ludiques tels que des étoiles scintillantes dans le ciel étoilé autour de la Lune. Il est à noter que la présente invention a aussi un intérêt dans les produits type sportswear.

On peut également envisager selon une variante de l'invention de faire de même avec une éclipse de soleil ou de lune, le motif étant une image d'un astre et le dispositif d'affichage comprenant une pluralité de pixels de forme commutables définis par les électrodes structurées transparentes et représentant des segments de forme aptes à représenter une image animée dudit astre afin de représenter ladite éclipse. Bien entendu d'autres objet celeste telles que des comètes, satellites naturels ou pas peuvent être représentés de manière analogue sur l'affichage de manière dynamique.

On notera que lorsque dispositif est combiné avec un transflecteur à l'arrière le dispositif de rétroéclairage associé peut émettre une couleur modulable pour mieux coller à la réalité des couleurs de l'objet du motif à représenter, notamment lors d'éclipses partielles ou totales.

A la figure 4 est représenté un ensemble de cadran 44 pour pièce d'horlogerie (non représenté) comprenant un cadran 46 et un dispositif d'affichage à cristaux liquides 48 du type de celui décrit en liaison avec les figures 1 à 3. Le dispositif d'affichage 48 est visible à travers un fenêtre 50 prévue dans le cadran 46. Dans l'exemple illustré, le cadran 46 comprend une image fixe qui forme le ciel avec étoiles fixes 52, et le motif décoratif de l'affichage représente une lune sous forme de plusieurs pixels de forme 38i comme décrit précédemment en liaison avec la figure 2, ledit motif pouvant représenter l'évolution des phases de la lune de manière dynamique. Alternativement, le motif décoratif pourra représenter, sous forme d'un ensemble de pixels de forme, certaines planètes, comètes ou autre objets célestes (satellites naturels ou pas) qui seront représentés par le dispositif d'affichage à cristaux liquides de manière dynamique.

Alors que des modes de réalisation particuliers viennent d'être décrits en détail, l'homme du métier appréciera que diverses modifications et alternatives à ceux-là peuvent être développées à la lumière de l'enseignement global apporté par la présente divulgation de l'invention. Par conséquent, les agencements et/ou procédés spécifiques décrits ci-dedans sont censés être donnés uniquement à titre d'illustration, sans intention de limiter la portée de l'invention, qui est déterminée par l'étendue des revendications rattachées.

## Revendications

1. Dispositif d'affichage à cristaux liquides, le dispositif d'affichage comprenant :
deux substrats transparents en regard désignés respectivement substrat avant et substrat arrière, le substrat avant étant celui disposé côté observateur, les substrats avant et arrière étant pourvus sur leurs faces internes d'électrodes structurées transparentes dont la superposition définit des pixels de forme commutables entre deux états optiques, les électrodes étant reliées à une source de tension par l'intermédiaire d'un circuit de commande, formant une cellule fermée par un cadre de scellement pour recevoir dans l'espace délimité par les substrats et le cadre de scellement une composition de cristaux liquides; et
un motif décoratif en contact direct avec le substrat avant et/ou avec le substrat arrière **caractérisé en ce que** le motif décoratif comportant des éléments alignés avec les électrodes structurées, de sorte que les pixels de forme recouvrent un ou plusieurs éléments du motif décoratif, et **en ce que** le motif décoratif est appliqué soit par impression digitale par jet d'encre ou impression laser, soit par l'application et la structuration, d'une résine photosensible, soit par la déposition physique ou chimique en phase vapeur d'une couche mince métallique et/ou diélectrique et la structuration de la couche mince déposée, soit par une combinaison de ces méthodes.

2. Dispositif d'affichage selon la revendication 1 **caractérisé en ce que** le motif décoratif est disposé sur une surface externe des substrats avant ou arrière.

3. Dispositif d'affichage selon la revendication 1 ou 2, **caractérisé en ce que** le motif décoratif est disposé sur la surface externe du substrat arrière.

4. Dispositif d'affichage selon l'une quelconque des revendications précédentes **caractérisé en ce que** le motif décoratif comprend la combinaison d'une couche d'encre structurée, photosensibles ou non, d'une couche mince métallique, l'ensemble de ces couches décoratives étant porté directement par le substrat avant ou le substrat arrière.

5. Dispositif d'affichage selon l'une quelconque des revendications 1 à 4, dans lequel le substrat avant est associé à un polariseur avant absorbant et transmissif et dans lequel le substrat arrière est associé à un polariseur arrière réflectif et absorbant, et dans lequel le motif décoratif est disposé entre le substrat arrière et le polariseur arrière.

6. Dispositif d'affichage selon l'une quelconque des revendications 1 à 4, dans lequel le substrat avant est associé à un polariseur avant absorbant et transmissif et dans lequel le substrat arrière est associé à un polariseur arrière réflectif et absorbant, et dans lequel le motif décoratif est disposé entre le substrat avant et le polariseur avant.

7. Dispositif d'affichage selon l'une quelconque des revendications 1 à 4, dans lequel le substrat avant est associé à un polariseur avant absorbant et transmissif et dans lequel le substrat arrière est associé à un réflecteur et dans lequel le motif décoratif est disposé entre le substrat avant et le polariseur avant.

8. Dispositif d'affichage selon l'une quelconque des revendications 1 à 4, dans lequel la composition de cristaux liquides comprend un colorant dichroïque et dans lequel le substrat arrière est associé à un réflecteur et dans lequel le motif décoratif est disposé soit sur la surface externe du substrat avant soit entre le substrat arrière et le réflecteur.

9. Dispositif d'affichage selon l'une quelconque des revendications 1 à 4, dans lequel la composition de cristaux liquides comprend un colorant dichroïque, dans lequel le substrat avant est associé à un polariseur absorbant transmissif et dans lequel le substrat arrière est associé à un réflecteur et dans lequel le motif décoratif est disposé soit entre le polariseur avant et le substrat avant soit entre le substrat arrière et le réflecteur.

10. Dispositif d'affichage selon l'une quelconque des revendications 1 à 4, dans lequel la composition de cristaux liquides comprend un colorant dichroïque, dans lequel le substrat arrière est associé à un polariseur arrière réflectif absorbant et dans lequel le motif décoratif est disposé entre le polariseur arrière et le substrat arrière.

11. Dispositif d'affichage selon l'une quelconque des revendications 5, 6 ou 10, dans lequel le polariseur arrière est remplacé par un polariseur transflectif et dans lequel un dispositif de rétroéclairage est disposé à l'arrière du polariseur transflectif.

12. Dispositif d'affichage selon l'une quelconque des revendications 5, 6 ou 10, dans lequel le polariseur arrière est remplacé par un polariseur absorbant transmissif et dans lequel un dispositif de rétroéclairage est disposé à l'arrière du polariseur transflectif.

13. Dispositif d'affichage selon la revendication 11 ou 12 dans lequel le dispositif de rétroéclairage émet une lumière dont la couleur est modulable.

14. Dispositif d'affichage selon l'une quelconque des revendications dans lequel le motif décoratif est en contact direct avec le substrat avant et avec le substrat arrière et dans lequel le motif décoratif est réalisé en au moins deux portions de motif complémentaire l'une de l'autre la juxtaposition des deux portions de motif complémentaires formant ledit motif décoratif.

15. Ensemble de cadran pour pièce d'horlogerie comprenant un cadran et un dispositif d'affichage selon l'une quelconque des revendications 1 à 14, ledit cadran portant une image statique complémentaire à celle du motif décoratif du dispositif d'affichage.

16. Pièce d'horlogerie et/ou de bijouterie comprenant un dispositif d'affichage selon l'une quelconque des revendications 1 à 14.

17. Pièce d'horlogerie et/ou de bijouterie selon la revendication 16, **caractérisée en ce que** le motif est une image d'un astre, le dispositif d'affichage comprenant une pluralité de pixels de forme commutables définis par les électrodes structurées transparentes et représentant des segments de forme aptes à représenter une image animée dudit astre.

18. Pièce d'horlogerie et/ou de bijouterie selon la revendication 17, **caractérisé en ce que** l'astre est la lune et **en ce que** la pluralité de pixels de forme commutables définis par les électrodes structurées transparentes et représentent des segments en forme de croissants représentant les phases de lune.

19. Un procédé de fabrication d'un dispositif d'affichage à cristaux liquides selon l'une quelconque des revendications 1 à 18, le procédé comprenant :
la mise à disposition d'un substrat avant et un substrat arrière, les substrats avant et arrière étant pourvus sur leurs faces internes d'électrodes structurées transparentes dont la superposition définit des pixels de forme commutables entre deux états optiques;
la disposition d'un cadre de scellements sur la face interne d'un des deux substrats ;
le scellement des deux substrats ensembles pour définir un espace délimité par les substrats ;
le remplissage de l'espace délimité par les substrats avec une composition de cristaux liquides; et
l'application d'un motif décoratif en contact direct avec le substrat avant ou le substrat arrière et dans lequel l'application du motif décoratif comprend :
∘ soit l'impression digitale du motif décoratif par jet d'encre ou par impression laser,
∘ soit l'application et la structuration, préférablement par photolithographie, d'une résine photosensible,
∘ soit la déposition physique ou chimique en phase vapeur d'une couche mince métallique et/ou diélectrique et la structuration de la couche déposée, préférablement par photolithographie,
∘ soit une combinaison de ces méthodes d'applications.

## Patentansprüche

1. Flüssigkristall-Anzeigevorrichtung, wobei die Anzeigevorrichtung Folgendes umfasst:
zwei gegenüberliegende transparente Substrate, die als vorderes Substrat bzw. hinteres Substrat bezeichnet werden, wobei das vordere Substrat das auf der Betrachterseite angeordnete ist und das vordere und das hintere Substrat auf ihren Innenflächen mit transparenten strukturierten Elektroden versehen sind, deren Überlagerung Formpixel definiert, die zwischen zwei optischen Zuständen umschaltbar sind, wobei die Elektroden über eine Steuerschaltung mit einer Spannungsquelle verbunden sind und eine durch einen Dichtungsrahmen geschlossene Zelle bilden, um in dem Bereich, der durch die Substrate und den Dichtungsrahmen begrenzt wird, eine Flüssigkristallzusammensetzung aufzunehmen; und
ein dekoratives Muster, das in direktem Kontakt mit dem vorderen Substrat und/oder dem hinteren Substrat steht und **dadurch gekennzeichnet ist, dass** das dekorative Muster mit den strukturierten Elektroden ausgerichtete Elemente aufweist, so dass die Formpixel ein oder mehrere Elemente des dekorativen Musters bedecken, und dadurch, dass das dekorative Muster entweder durch Digitaldruck mittels Tintenstrahl- oder Laserdruck, oder durch Aufbringen und Strukturieren eines lichtempfindlichen Harzes, oder durch physikalisches oder chemisches Dampfabscheiden einer dünnen Metall- und/oder dielektrischen Schicht und Strukturieren der abgeschiedenen dünnen Schicht, oder durch eine Kombination dieser Verfahren aufgebracht wird.

2. Anzeigevorrichtung nach Anspruch 1, **dadurch gekennzeichnet, dass** das dekorative Muster auf einer Außenfläche des vorderen oder des hinteren Substrats angeordnet ist.

3. Anzeigevorrichtung nach Anspruch 1 oder 2, **dadurch gekennzeichnet, dass** das dekorative Muster auf der Außenfläche des hinteren Substrats angeordnet ist.

4. Anzeigevorrichtung nach einem der vorhergehenden Ansprüche, **dadurch gekennzeichnet, dass** das dekorative Muster die Kombination aus einer lichtempfindlichen oder nicht lichtempfindlichen strukturierten Tintenschicht und einer dünnen Metallschicht umfasst, wobei die Anordnung dieser dekorativen Schichten direkt vom vorderen Substrat oder vom hinteren Substrat getragen wird.

5. Anzeigevorrichtung nach einem der Ansprüche 1 bis 4, wobei das vordere Substrat mit einem durchlässigen und absorbierenden vorderen Polarisator verbunden ist und wobei das hintere Substrat mit einem absorbierenden und reflektierenden hinteren Polarisator verbunden ist, und wobei das dekorative Muster zwischen dem hinteren Substrat und dem hinteren Polarisator angeordnet ist.

6. Anzeigevorrichtung nach einem der Ansprüche 1 bis 4, wobei das vordere Substrat mit einem durchlässigen und absorbierenden vorderen Polarisator verbunden ist und wobei das hintere Substrat mit einem absorbierenden und reflektierenden hinteren Polarisator verbunden ist, und wobei das dekorative Muster zwischen dem vorderen Substrat und dem vorderen Polarisator angeordnet ist.

7. Anzeigevorrichtung nach einem der Ansprüche 1 bis 4, wobei das vordere Substrat mit einem durchlässigen und absorbierenden vorderen Polarisator verbunden ist und wobei das hintere Substrat mit einem Reflektor verbunden ist und wobei das dekorative Muster zwischen dem vorderen Substrat und dem vorderen Polarisator angeordnet ist.

8. Anzeigevorrichtung nach einem der Ansprüche 1 bis 4, wobei die Flüssigkristallzusammensetzung einen dichroitischen Farbstoff umfasst und wobei das hintere Substrat mit einem Reflektor verbunden ist und wobei das dekorative Muster entweder auf der Außenfläche des vorderen Substrats oder zwischen dem hinteren Substrat und dem Reflektor angeordnet ist.

9. Anzeigevorrichtung nach einem der Ansprüche 1 bis 4, wobei die Flüssigkristallzusammensetzung einen dichroitischen Farbstoff umfasst, wobei das vordere Substrat mit einem durchlässigen absorbierenden Polarisator verbunden ist und wobei das hintere Substrat mit einem Reflektor verbunden ist und wobei das dekorative Muster entweder zwischen dem vorderen Polarisator und dem vorderen Substrat oder zwischen dem hinteren Substrat und dem Reflektor angeordnet ist.

10. Anzeigevorrichtung nach einem der Ansprüche 1 bis 4, wobei die Flüssigkristallzusammensetzung einen dichroitischen Farbstoff umfasst, wobei das hintere Substrat mit einem absorbierenden reflektierenden hinteren Polarisator verbunden ist und wobei das dekorative Muster zwischen dem hinteren Polarisator und dem hinteren Substrat angeordnet ist.

11. Anzeigevorrichtung nach einem der Ansprüche 5, 6 oder 10, wobei der hintere Polarisator durch einen transflektiven Polarisator ersetzt ist und wobei eine Hintergrundbeleuchtungsvorrichtung an der Rückseite des transflektiven Polarisators angeordnet ist.

12. Anzeigevorrichtung nach einem der Ansprüche 5, 6 oder 10, wobei der hintere Polarisator durch einen transmissiven absorbierenden Polarisator ersetzt ist und wobei eine Hintergrundbeleuchtungsvorrichtung an der Rückseite des transflektiven Polarisators angeordnet ist.

13. Anzeigevorrichtung nach Anspruch 11 oder 12, wobei die Hintergrundbeleuchtungsvorrichtung ein Licht aussendet, dessen Farbe anpassbar ist.

14. Anzeigevorrichtung nach einem der Ansprüche, wobei das dekorative Muster in direktem Kontakt mit dem vorderen Substrat und mit dem hinteren Substrat steht und wobei das dekorative Muster aus mindestens zwei zueinander komplementären Musterabschnitten hergestellt wird, wobei die Aneinanderreihung der beiden komplementären Musterabschnitte das dekorative Muster bildet.

15. Zifferblattanordnung für eine Uhr, umfassend ein Zifferblatt und eine Anzeigevorrichtung nach einem der Ansprüche 1 bis 14, wobei das Zifferblatt ein statisches Bild trägt, das komplementär zu dem des dekorativen Musters der Anzeigevorrichtung ist.

16. Uhr und/oder Schmuckstück, umfassend eine Anzeigevorrichtung nach einem der Ansprüche 1 bis 14.

17. Uhr und/oder Schmuckstück nach Anspruch 16, **dadurch gekennzeichnet, dass** das Muster ein Bild eines Himmelskörpers ist, wobei die Anzeigevorrichtung eine Vielzahl von umschaltbaren Formpixeln umfasst, die durch die transparenten strukturierten Elektroden definiert werden und Formsegmente darstellen, die dazu ausgebildet sind, ein animiertes Bild des Himmelskörpers darzustellen.

18. Uhr und/oder Schmuckstück nach Anspruch 17, **dadurch gekennzeichnet, dass** der Himmelskörper der Mond ist und die Vielzahl von umschaltbaren Formpixeln durch die transparenten strukturierten Elektroden definiert sind und halbmondförmige Segmente darstellen, die die Mondphasen darstellen.

19. Verfahren zum Herstellen einer Flüssigkristallanzeigevorrichtung nach einem der Ansprüche 1 bis 18, wobei das Verfahren Folgendes umfasst:
Bereitstellen eines vorderen Substrats und eines hinteren Substrats, wobei das vordere und das hintere Substrat auf ihren Innenflächen mit transparenten strukturierten Elektroden versehen sind, deren Überlagerung Formpixel definiert, die zwischen zwei optischen Zuständen umschaltbar sind;
Anordnen eines Dichtungsrahmens auf der Innenfläche eines der beiden Substrate;
Versiegeln der beiden Substrate miteinander, um einen durch die Substrate begrenzten Bereich zu definieren;
Füllen des durch die Substrate begrenzten Bereichs mit einer Flüssigkristallzusammensetzung; und
Aufbringen eines dekorativen Musters, das in direktem Kontakt mit dem vorderen Substrat oder dem hinteren Substrat steht, und wobei das Aufbringen des dekorativen Musters Folgendes umfasst:
∘ entweder durch Digitaldruck des dekorativen Musters mittels Tintenstrahl- oder Laserdruck,
∘ oder durch Aufbringen und Strukturieren, vorzugsweise durch Fotolithografie, eines lichtempfindlichen Harzes,
∘ oder durch physikalisches oder chemisches Dampfabscheiden einer dünnen Metall- und/oder dielektrischen Schicht und Strukturieren der abgeschiedenen dünnen Schicht, vorzugsweise durch Fotolithografie,
∘ oder durch eine Kombination dieser Aufbringungsverfahren.

## Claims

1. Liquid crystal display device, the display device comprising:
two facing transparent substrates designated respectively front substrate and rear substrate, the front substrate being same disposed on the observer side, the front and rear substrates being provided on the inner faces thereof with transparent structured electrodes whereof the superposition defines shape pixels switchable between two optical states, the electrodes being connected to a voltage source via a control circuit, forming a cell closed by a sealing frame for receiving in the spaced delimited by the substrates and the sealing frame a liquid crystal composition; and
a decorative pattern in direct contact with the front substrate and/or the rear substrate, **characterised in that** the decorative pattern comprises elements aligned with the structured electrodes, such that the shape pixels cover one or more elements of the decorative pattern, and **in that** the decorative pattern is applied either by a digital printing process by ink jet or laser printing, or by applying and structuring a photosensitive resin, or by physical or chemic vapour deposition of a thin metal and/or dielectric layer and structuring the thin layer deposited, or by a combination of these methods.

2. Display device according to claim 1 **characterised in that** the decorative pattern is disposed on an outer surface of the front or rear substrates.

3. Display device according to claim 1 or 2 **characterised in that** the decorative pattern is disposed on the outer surface of the rear substrate.

4. Display device according to any one of the preceding claims **characterised in that** the decorative pattern comprises the combination of a structured ink layer, photosensitive or not, and a thin metal layer, all of said decorative layers being supported directly by the front substrate or the rear substrate.

5. Display device according to any one of claims 1 to 4, wherein the front substrate is associated with a transmissive and absorbing front polarizer and wherein the rear substrate is associated with an absorbing and reflective rear polarizer, and wherein the decorative pattern is disposed between the rear substrate and the rear polarizer.

6. Display device according to any one of claims 1 to 4, wherein the front substrate is associated with a transmissive and absorbing front polarizer and wherein the rear substrate is associated with an absorbing and reflective rear polarizer, and wherein the decorative pattern is disposed between the front substrate and the front polarizer.

7. Display device according to any one of claims 1 to 4, wherein the front substrate is associated with a transmissive and absorbing front polarizer and wherein the rear substrate is associated with a reflector and wherein the decorative pattern is disposed between the front substrate and the front polarizer.

8. Display device according to any one of claims 1 to 4, wherein the liquid crystal composition comprises a dichroic colorant and wherein the rear substrate is associated with a reflector and wherein the decorative pattern is disposed either on the outer surface of the front substrate or between the rear substrate and the reflector.

9. Display device according to any one of claims 1 to 4, wherein the liquid crystal composition comprises a dichroic colorant, wherein the front substrate is associated with a transmissive absorbing polarizer and wherein the rear substrate is associated with a reflector, and wherein the decorative pattern is disposed either between the front polarizer and the front substrate or between the rear substrate and the reflector.

10. Display device according to any one of claims 1 to 4, wherein the liquid crystal composition comprises a dichroic colorant, wherein the rear substrate is associated with an absorbing reflective rear polarizer and wherein the decorative pattern is disposed between the rear polarizer and the rear substrate.

11. Display device according to any one of claims 5, 6 or 10, wherein the rear polarizer is replaced with a transflective polarizer and wherein a backlighting device is disposed at the rear of the transflective polarizer.

12. Display device according to any one of claims 5, 6 or 10, wherein the rear polarizer is replaced with a transmissive absorbing polarizer and wherein a backlighting device is disposed at the rear of the transflective polarizer.

13. Display device according to claim 11 or 12 wherein the backlighting device emits a light the colour of which is modulable.

14. Display device according to any one of the claims wherein the decorative pattern is in direct contact with the front substrate and with the rear substrate and wherein the decorative pattern is produced in at least two pattern portions complementing one another the juxtaposition of the two complementing pattern portions forming said decorative pattern.

15. Dial assembly for a timepiece comprising a dial and a display device according to any one of claims 1 to 14, said dial supporting a static image complementing same of the decorative pattern of the display device.

16. Timepiece and/or piece of jewellery comprising a display device according to any one of claims 1 to 14.

17. Timepiece and/or piece of jewellery according to claim 16, **characterised in that** the pattern is an image of a celestial body, the display device comprising a plurality of switchable shape pixels defined by the transparent structured electrodes and showing shape segments capable of representing an animated image of said celestial body.

18. Timepiece and/or piece of jewellery according to claim 17, **characterised in that** the celestial body is the moon and **in that** the plurality of switchable shape pixels defined by the transparent structured electrodes show crescent-shaped segments representing the moon phases.

19. Method for manufacturing a liquid crystal display device according to any one of claims 1 to 18, the method comprising:
providing a front substrate and a rear substrate, the front and rear substrates being provided on the inner faces thereof with transparent structured electrodes whereof the superposition defines shape pixels switchable between two optical states;
arranging a sealing frame on the inner face of one of the two substrates; sealing the two substrates together in order to define a space delimited by the substrates;
filling the space delimited by the substrates with a liquid crystal composition; and
applying a decorative pattern in direct contact with the front substrate or the rear substrate, and wherein the application of the decorative pattern comprises:
∘ either digitally printing the decorative pattern by ink jet or laser printing,
∘ or applying and structuring, preferably by photolithography, a photosensitive resin,
∘ or physical or chemical vapour deposition of a thin metal and/or dielectric layer and structuring the thin layer deposited, preferably by photolithography,
∘ or a combination of said application methods.
